**Europäisches Patentamt**

(19) **European Patent Office**

**Office européen des brevets**

(11) Publication number: **0 139 000**
**B1**

(12) **EUROPEAN PATENT SPECIFICATION**

(45) Date of publication of patent specification: **03.08.88**

(21) Application number: **84901844.5**

(22) Date of filing: **06.04.84**

(86) International application number:
**PCT/US84/00528**

(87) International publication number:
**WO 84/04149 25.10.84 Gazette 84/25**

(51) Int. Cl.⁴: **F 22 B 1/18, F 22 B 21/24,
F 22 B 33/16, F 22 B 37/20,
F 01 K 9/00, F 01 K 23/10**

(54) **ONCE THROUGH BOILER.**

(30) Priority: **08.04.83 US 483437**

(43) Date of publication of application:
**02.05.85 Bulletin 85/18**

(45) Publication of the grant of the patent:
**03.08.88 Bulletin 88/31**

(84) Designated Contracting States:
**CH DE FR GB LI SE**

(56) References cited:
**WO-A-83/00371**
**BE-A- 522 339**
**CH-A- 621 186**
**DE-A-1 811 596**
**FR-A- 965 429**
**GB-A-2 095 761**
**US-A-3 084 742**

(73) Proprietor: **SOLAR TURBINES INCORPORATED**
**2200 Pacific Highway P.O. Box 80966**
**San Diego California 92138 (US)**

(72) Inventor: **DUFFY, Thomas, E.**
**2226 Illion Street**
**San Diego, CA 92110 (US)**
Inventor: **ARCHIBALD, John, P.**
**5554 Candelight Drive**
**La Jolla, CA 92037 (US)**
Inventor: **CAMPBELL, Alan, H.**
**625 Cerro Street**
**Encinitas, CA 92024 (US)**

(74) Representative: **Jackson, Peter Arthur et al**
**GILL JENNINGS & EVERY 53-64 Chancery Lane**
**London WC2A 1HN (GB)**

Courier Press, Leamington Spa, England.

## Description

Once-through boilers have heretofore typically been designed along the same lines as conventional boilers.

Conventional steam boilers have a number of economic shortcomings and cause many operating problems in combined cycle applications, particularly, those of small capacity using gas turbines in the 4000—25000 Kw range.

Start-up and shut down procedures are complex. Attended operation is mandatory, and as many as seven hours may be needed to carry out the procedure.

Heat recovery is low because conventional boilers only produce steam at a single pressure. Consequently, even at high expense, only a moderate improvement in station heat rate may be obtained.

Tube, valve stem, joint and other leaks are common conventional boilers. These are difficult and time consuming, and consequently expensive to repair or plug. Excessive feedwater consumption and maintenance costs and deterioration in performance result.

Conventional boilers are also subject to freezing and related damage during installation and checkout.

FR—A—965429 discloses a boiler having a vertical outer casing and a steam generating circuit including sinuous, internesting, high and low pressure tubes with horizontal tube runs, and a feed water pump for effecting a flow of water into the steam generating circuit.

WO—A—8300371 discloses a once-through boiler having a vertical outer casing with a gas inlet and a gas outlet at the lower and upper ends, respectively, thereof; an overhead support structure in the outer casing; and a plurality of independent steam generating circuits each including a single sinuous, high pressure tube and a single, sinuous, low pressure tube, both with horizontal tube runs; each steam generating circuit being hung from the overhead support structure by an independent set of hangers which support the ends of the horizontal tube runs of the respective circuit; and, in accordance with the invention, such a boiler is characterised by a feed water pump for effecting a flow of water into the steam generating circuits; in that in each of the steam generating circuits the low pressure tube is internested with the high pressure tube; and by the hangers being in juxtaposed relationship and cooperating with liners at the front and rear of the casing to define a gas path up within the outer casing from the inlet to the outlet.

Advantageous embodiments of the invention are contained in the dependent Claims 2 to 9.

The present invention provides a novel boiler capable of dual pressure steam generation; i.e., of raising steam at two different pressure levels in what amounts to two hydraulically independent boilers sharing a common gas path. As a result, they may be 21—25 percent more efficient in recovering heat than a conventional boiler in a typical combined cycle power plant. The boiler has a once-through configuration in which the transition from water to superheated steam takes place in continuous tubes or circuits, each having a high and a lower pressure section. All components of the boilers contacted by water or steam are preferably fabricated of a stainless steel or other corrosion resistant material. This eliminates the complex chemical treatment required in a conventional boiler to control pH and dissolved oxygen in the feedwater, reducing maintenance and operating costs and further tending to make automated operation feasible.

In the accompanying drawings:—

Figure 1 is a schematic view of a combined cycle power plant which includes a once-through boiler constructed in accord with and embodying the principles of the present invention;

Figure 2 is a front elevation of the boiler with part of the boiler casing broken away to show its internal components;

Figure 3 is a generally diagrammatic view of the internal components of the boiler;

Figure 4A is a left-hand end view of one of a number of essentially identical circuit assemblies in which steam is generated in the boiler;

Figure 4B is a side view of an end support strap incorporated in the circuit assembly;

Figure 5A is a side elevation of a centre support strap incorporated in each of the circuit assemblies;

Figure 5B is an end elevation of the centre strap; and,

Figure 6 is a partially sectioned view of the structure at the inlet end of a circuit assembly tube.

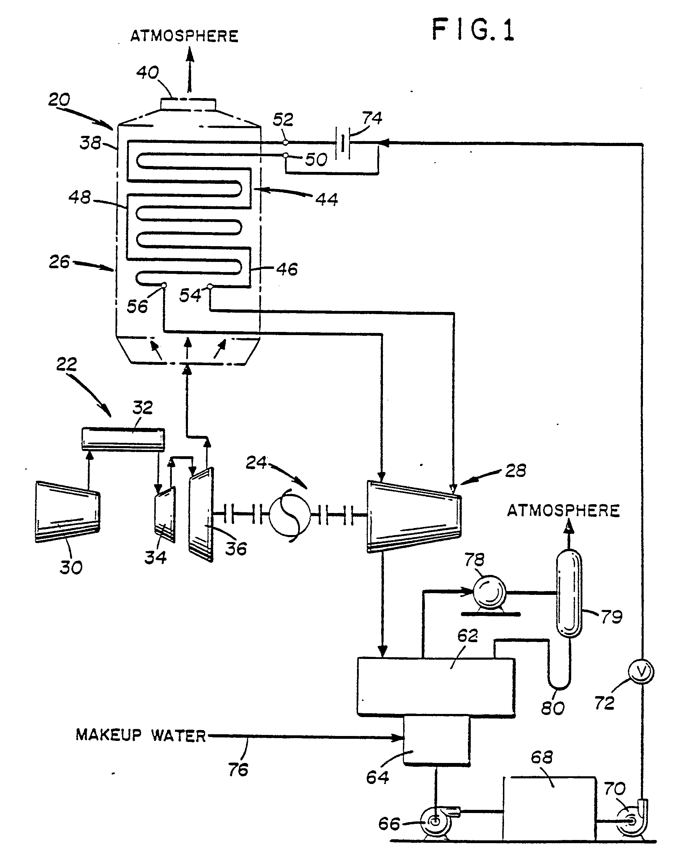

Figure 1 depicts a combined cycle power plant 20 of which, for the most part, the components are of conventional or otherwise familiar construction. Those components will be described herein only to the extent necessary for an understanding of the present invention.

The combined power plant is subject-matter of the divisional patent application EP—A—0205194.

The major components of power plant 20 include a gas turbine engine 22 drive connected to an alternator 24, a once-through boiler 26 embodying the principles of the present invention in which steam is generated by thermal energy recovered from the hot gases exhausted from gas turbine engine 22, and a steam turbine 28 also drive connected to alternator 24 and employing the steam in boiler 26 as a motive fluid.

In power plant 20, steam turbine 28 also drives the exemplary load, alternator 24. However, it can equally well be employed to drive a load which is different from the load being driven by gas turbine engine 22.

The illustrated gas turbine engine is conventional configuration; it includes a compressor 30, a combustor 32, a gas producer turbine 34 for driving compressor 30, and a power turbine 36 which drives alternator 24. Hot gases exhausted from power turbine 36, typically at a temperature in the range of 427—482°C, are ducted to, and flow upwardly through, the casing 38 of steam generator 26. Typically, these gases will be exhausted to atmosphere through stack 40 at a temperature on the order of 112°C. The heat thus recovered is typically 21—25% higher than can be recovered in the unfired boilers heretofore employed in combined cycle power plants.

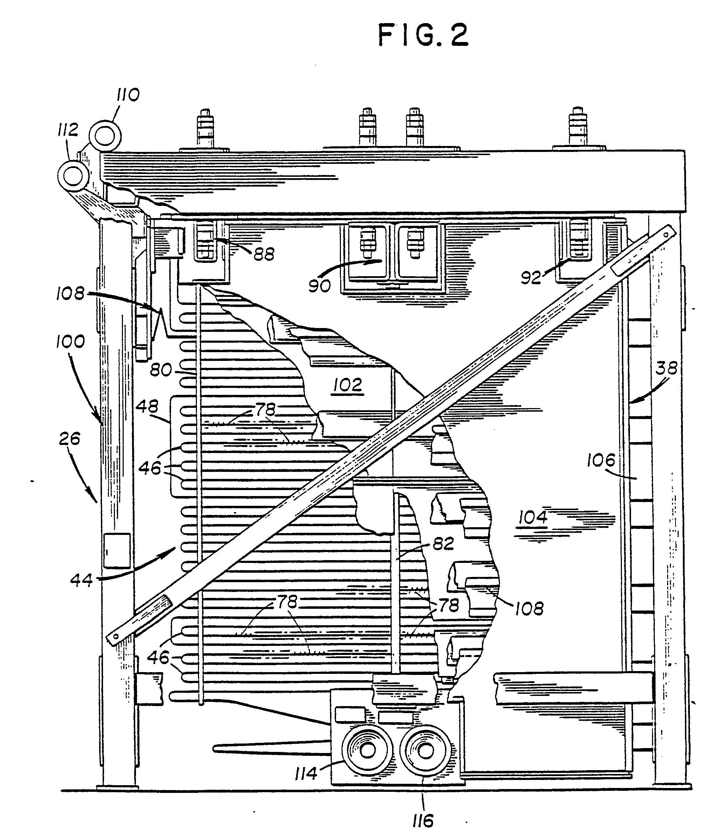

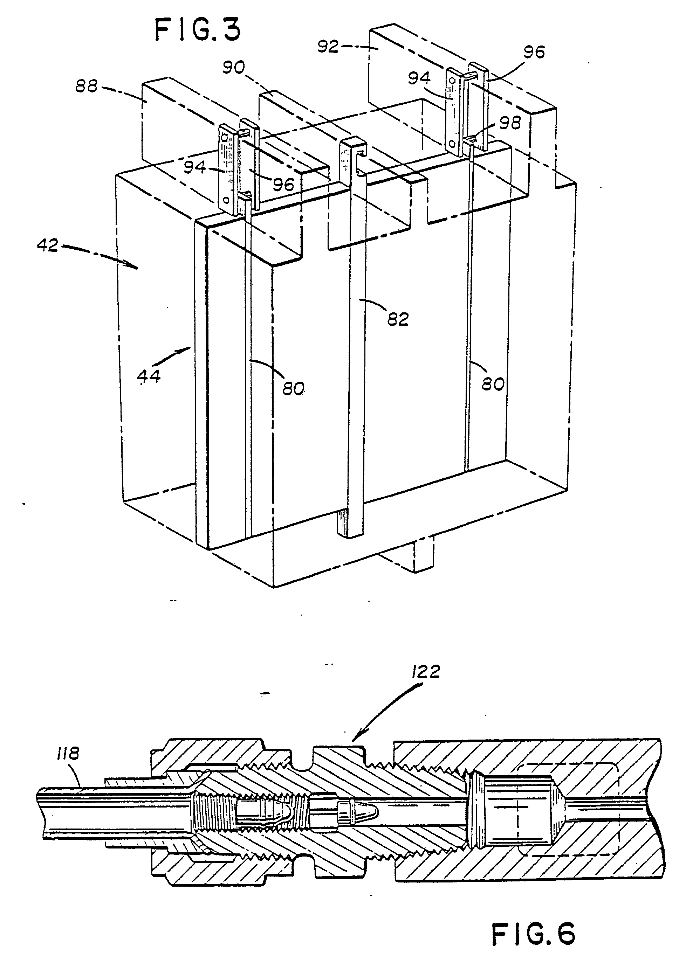

The boiler 26 illustrated in Figure 1 has a once-through, dual pressure configuration. It includes a steam generating module 42 (see Figures 2 and 3). In one actual boiler design in accord with the principles of the present invention this module is made of forty steam generating circuit assemblies each including a high pressure tube 46 and a low pressure tube 48. In each of these tubes a phase change of water to saturated steam and from saturated steam to superheated steam occurs in a continuous flow path extending from the inlet 50 (or 52) to the outlet 54 (or 56) of the tube as the water flows downwardly through the tube in efficient, counterflow relationship to the flow of the hot gas turbine engine exhaust gases. Thus, different regions in each tube function as a feedwater heater, as a vaporizer, and as a superheater.

High pressure steam generated in tubes 46 of boiler 26 flows into the high pressure section of dual pressure steam turbine engine 28, and low pressure steam generated in the boiler flows into the low pressure section of the turbine.

Steam exhausted from turbine 28 flows into a conventional water cooled surface condenser 62 where the steam is condensed (other types of condensers such as those using air as the cooling medium can be used instead, if desired). Condensate accumulates in hot well 64 which contains the inventory of feedwater needed for boiler 26. That the feedwater inventory can be contained in this relatively small capacity system component is important because the large mass of saturated water contained in the drums of a conventional boiler, and eliminated in the novel boilers disclosed herein, is a safety hazard and has produced widespread legislation requiring attended boiler operation. This is cost effective and, also, permits remote, unattended operation of combined cycle power plant 20.

From hot well 64, the condensed steam is circulated by condensate pump 66 to a condensate polisher 68. Here, dissolved solids are removed. The condensate is then pumped to steam generator 26 by feedwater pump 70 through a flow control valve 72. This valve matches the feedwater flow rate to the enthalpy in the hot gases supplied to the steam generator from gas turbine engine 22. A fixed orifice 74 on the upstream side of the inlets 50 and 52 to steam generating tubes 46 and 48 splits the feedwater in proper proportions between the high pressure tubes 46 and the low pressure tubes 48.

As indicated above, it has unexpectedly been found that the fabrication of those boiler components wetted by aqueous fluids from corrosion resistant material eliminates the need for chemically removing dissolved oxygen from the feedwater supplied to boiler 26 or for controlling the pH of the feedwater. Instead, physical removal of dissolved oxygen by hot well deaeration has been found adequate to prevent corrosion of the boiler components even without pH control.

Hot well deaeration is effected by a vacuum pump connected to hot well 64 through condenser 62. Oxygen evacuated from the hot well and condenser by the vacuum pump typically contains appreciable amounts of entrained water. Consequently, the evacuated air is pumped into a conventional separator 78. Air is discharged from separator 78 to atmosphere, and water is returned through a trap 79 from separator 78 to condenser 62.

One of the important advantages of the steam generators disclosed herein and discussed above is that the requirement for make-up of feedwater is nominal. For example, one boiler of the type disclosed herein is planned to produce 6,998 kilograms of steam per hour at one exemplary design point. Make-up water requirements for this boiler are less than 2.4 liters per hour. In contrast, make-up water requirements for a conventional blowdown boiler of comparable capacity are about 170 liter per hour.

Such make-up water as is required is first demineralized and then supplied to hot well 64 through make-up water line 76.

Referring now more specifically to Figures 2 and 3, each of the forty separate circuit assemblies 44 making up the steam generating module 42 of boiler 26 has a serpentine high pressure tube 46 with twenty-nine horizontal tube runs connected by U-shaped end bends and, internested therewith, a serpentine low pressure tube 48 with sixteen tube runs also connected by U-shaped end bends. In this exemplary boiler, the external tube diameter is 158.75 mm in the low pressure tubes 48 and in the feedwater sections of the high pressure tubes 46, and the wall thickness is 14.73 mm. The external tube diameter is increased to 190.5 mm in the vaporizer and superheater sections of the high pressure tubes 46 to reduce the pressure drop in those tubes.

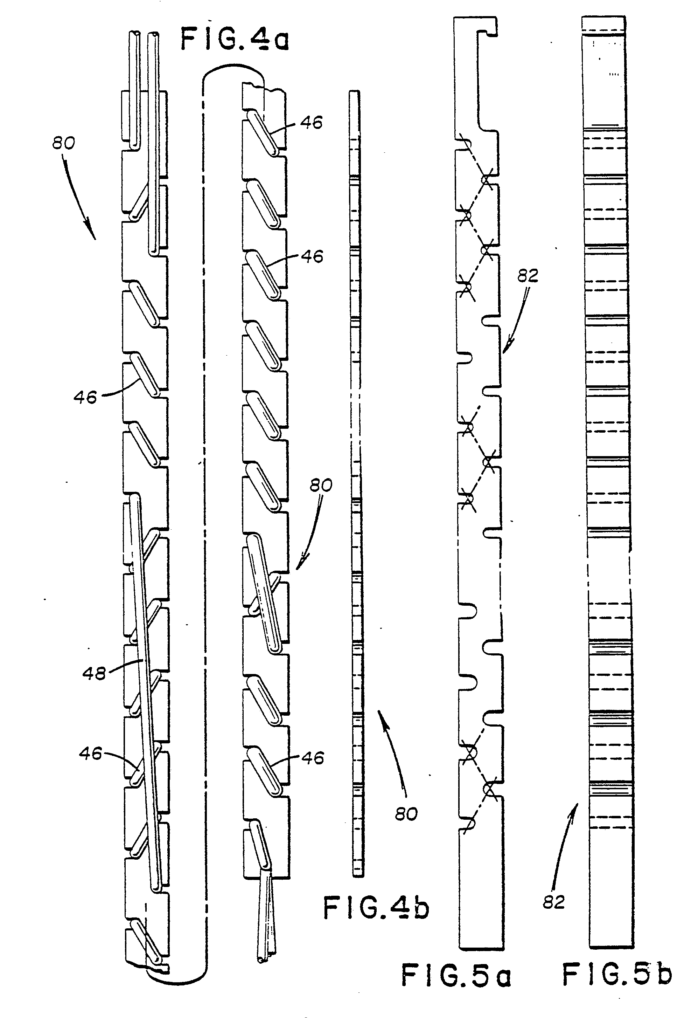

The tube runs are staggered, as can be seen in Figure 4A, and spaced on about 508 mm centers. Although not critical, the staggered tube run configuration is preferred as this provides maximum heat transfer area per unit volume of steam generating boiler module 42. Specifically, in a typical boiler in accord with the present invention, four rows of staggered run tubes will provide approximately the same transfer of heat from the hot gases to the feedwater as seven rows of parallel tubes will.

Solid helical fins (shown diagrammatically in Figure 2 and identified by reference character 78) surround both the high and low pressure tubes 46 and 48. In the exemplary boiler under discussion, fins 6.35 mm thick and 95.25 mm tall are employed. These fins are spaced apart about 36.29 mm on the 158.75 mm outer diameter tubes and about 28.22 mm on the 190.5 mm outer diameter tubes. The use of finned tubing is another important practical feature as a finned tube can provide up to ten times the heat transfer surface area of a bare tube.

As indicated above, a number of desirable attributes of those boilers disclosed herein such as reduced maintenance and operating costs, simplification of automatic operation, and elimination of possibilities for operator error are obtained by the use of corrosion resistant materials, thereby eliminating the need for controlling the pH of the boiler feedwater or for chemically controlling its dissolved oxygen content. To this end, tubes 46 and 48 are made of such a material, typically a nickel-chromium-iron containing, high temperature and corrosion resistant alloy.

The other boiler components in the water-steam circuit are also fabricated of corrosion resistant materials such as those just discussed or of Type 316 or 321 stainless steels as a further example.

Another advantage of fabricating the tubes 46 and 48 and other water or steam wetted boiler components from materials such as those just described is that the boiler can be operated dry for extended periods of time. As indicated above, this mode of operation can be employed to rid the boiler tube and other surfaces contacted by hot gases of soot or other gas side fouling.

Still another advantage of using corrosion resistant materials for the purpose just described is that they make the boiler capable of withstanding corrosion in marine environments, making it eminently suitable for offshore platform and similar applications.

Referring again to the drawing, the horizontal runs of the high pressure tube 46 and of the low pressure tube 48 in each of the circuit assemblies 44 are fixed to vertical end straps 80 and a vertical center strap 82 (see Figures 4A, 4B, 5A, and 5B).

The end straps are configured to accept shouldered sleeves which are brazed to the tubes at the ends of the finned areas. With the forty circuit assemblies 44 disposed in the side-by-side arrangement shown in Figure 3, the end straps 80 combined to form two side walls defining the flow path of the hot gases through boiler 26.

The center strap 82 of each circuit assembly 44 is notched to accept sleeves which are brazed onto the fins at the midspan of each tube run. This arrangement is significant as it permits continuous finning of the tube runs. The center straps are positioned by alternating flares on sleeves (not shown) on opposite sides of the strap.

Referring now to Figures 2 and 3, the circuit assemblies 44 made up of high and low pressure steam generating tubes 46 and 48 and the corresponding independent set of end and center straps or hangers 80 and 82 are suspended from horizontal supports 88, 90 and 92 which cross the gas path through boiler 26. In particular, end hangers 80 are suspended from beams 88 and 92 by support straps 94 and 96. The upper ends of straps 94 and 96 are pinned to the associated hanger 80 by fasteners 98. The upper ends of center hangers 82 are configured to engage a ledge (not shown) running along center support beam 90.

This hanger and strap arrangement by which the tubes of the various circuit assemblies 44 are suspended is important because it provides a high degree of thermal compliance. This furthers the capabilities of boiler 26 to be operated dry for the removal of gas side fouling without causing structural damage to the boiler.

Beams 88, 90 and 92 are supported from a cold frame 100 of post-and-beam construction. The details of this frame are not part of the present invention; and they will, consequently, not be described herein.

The cold frame also supports a front liner 102 and a rear liner (not shown). These two liners cooperate with the assembled end straps 80 of the circuit assemblies 44 to define the gas path through boiler 26.

Also supported from cold frame 100 is an outer casing composed of a front panel 104, two side panels 106 (only one of which is shown), and a rear panel (not shown). The panels are separated from the assembled end straps 80 and the front and rear inner liners by spaces 108.

This is an important safety feature. Any steam that escapes through a leak or rupture will be ducted upwardly through the boiler and out stack 40 and will consequently not endanger personnel in the area of the boiler.

Cold frame 100 also supports feedwater inlet headers 110 and 112. As shown in Figure 2, the steam outlet headers 114 and 116 are enclosed within and supported by the outer casing of boiler 26 so that they can drop downwards as the boiler temperature increases. This, too, ensures that escaping steam will be safely vented from the boiler rather than endangering personnel in the vicinity.

Referring now to Figures 1, 2 and 6, feedwater is supplied to each of the high and low pressure steam generating tubes 46 and 48 from inlet headers 110 and 112 through a tube 118. A filter and orifice assembly 122 is installed in each feedwater supply tube. Typically, the orifice will be sized to create a substantial pressure drop across the tube 46 or 48 with which the orifice assembly is associated. This ensures boiling stability in the steam generating tubes and equal flow distribution of the feedwater among the paralleled high pressure tubes and the paralleled low pressure tubes.

## Claims

1. A once-through boiler (26) having a vertical outer casing (38) with a gas inlet and a gas outlet (40) at the lower and upper ends respectively, thereof; an overhead support structure (88, 90, 92) in the outer casing (38); and a plurality of independent steam generating circuits (44) each including a single, sinuous, high pressure tube (46) and a single, sinuous, low pressure tube, both with horizontal tube runs; each steam generating circuit (44) being hung from the overhead support structure (88, 92, 94, 96) by an independent set of hangers (80) which support the ends of the horizontal tube runs of the respective circuit; characterised by a feed water pump (70) for effecting a flow of water into the steam generating circuits (44); in that in each of the steam generating circuits (44) the low pressure tube (48) is inter-nested with the high pressure tube (46); and by the hangers (80) being in juxtaposed relationship and cooperating with liners (102) at the front and rear of the casing to define a gas path up within the outer casing (38) from the inlet to the outlet (40).

2. A boiler (26) according to claim 1, wherein all components that are wettable by aqueous fluids are fabricated from corrosion resistant materials.

3. A boiler according to claim 1 or claim 2, wherein the high and low pressure tubes (46, 48) are equipped with solid, helical, external fins (78).

4. A boiler according to any one of the preceding claims, wherein there is an orifice means (122) at the inlet end (52, 50) of each of the high and low pressure tubes (48, 46) for creating at the inlet thereof a pressure drop which is sufficiently higher than the pressure drop across the remainder of the tube (48, 46) to reduce flow instability in the tube (48, 46).

5. A boiler according to any one of the preceding claims, which includes outlet headers (114, 116) for receiving the steam generated in the high and low pressure tube (48, 46) runs, the outlet headers (114, 116) being enclosed in the outer casing (38) whereby steam generated in the boiler (26) and escaping by leakage or rupture will be safely ducted from the casing (38) through the exhaust gas outlet (40).

6. A boiler according to any one of the preceding claims, wherein the overhead support structure comprises horizontal spaced apart beams (88, 90, 92) from which an independent set of centre and end straps (82, 80) for supporting the high and low pressure tubes (46, 48) of each of the steam generating circuits (44), are suspended.

7. A boiler according to any one of the preceding claims, wherein the horizontal tube runs are so staggered as to increase the transfer of heat from hot gases flowing upward through the casing (38) to the high and low pressure tubes (46, 48).

8. A boiler according to any one of the preceding claims, wherein the high pressure tubes (46) each has feed water, vaporizer, and superheater sections.

9. A boiler according to claim 8, wherein the vaporizer and superheater sections are of greater diameter than the feed water section.

## Patentansprüche

1. Ein einmal durchgeführter Kessel (26) mit einem vertikalen äußeren Gehäuse (38) mit einem Gaseinlaß und einem Gasauslaß (40) an den oberen bzw. unteren Enden desselben; eine oben angeordnete Tragstruktur (88, 90, 92) im äußeren Gehäuse (38); und eine Vielzahl von unabhängigen Dampferzeugungskreisen (44) deren jeder ein einziges sinusförmiges Hochdruckrohr (46) und ein einziges sinusförmiges Niederdruckrohr aufweist, und zwar beide mit horizontalen Rohrverläufen; wobei jeder Dampferzeugungskreis (44) an der oben angeordneten Tragstruktur (88, 92, 94, 96) durch einen unabhängigen Satz von Hängevorrichtungen (80) aufgehängt iste, welche die Enden der horizontalen Rohrverläufe des entsprechenden Kreises tragen, gekennzeichnet durch eine Speisewassenpumpe (70) zur Bewirkung des Wasserflußes in die Dampferzeugungskreise (44); ferner dadurch gekennzeichnet, daß in jedem der Dampferzeugungskreise (44) das Niederdruckrohr (48) ineinandersitzend mit dem Hochdruckrohr (46) ausgebildet ist; und ferner gekennzeichnet dadurch, daß die Hängevorrichtungen (80) in benachbarter Beziehung und zusammenarbeitend mit Auskleidungen (102) an der Vorderseite und Rückseite des Gehäuses angeordnet sind, um innerhalb des äußeren Gehäuses (38) vom Einlaß zum Auslaß (40) einen Gaspfad zu definieren.

2. Kessel (26) nach Anspruch 1, wobei sämtliche Komponenten die durch wässrige Flüssigkeiten benetzbar sind aus korrosionsbeständigen Materialien hergestellt sind.

3. Kessel nach Anspruch 1 oder 2, wobei die Hoch- und Niederdruckrohre (46, 48) mit soliden schraubenlinienförmigen externen Flächenelementen (78) ausgestattet sind.

4. Kessel nach einem der vorhergehenden Ansprüche, wobei am Einlaßende (52, 50) von jedem der Hoch- und Niederdruckrohre (48, 46) Zumeßöffnungsmittel (122) vorgesehen sind, um am Einlaß davon einen Druckabfall zu erzeugen, der hinreichend höher liegt als der Druckabfall am Rest des Rohres (48, 46) um so die Strömungsinstabilität in dem Rohr (48, 46) zu reduzieren.

5. Kessel nach einem der vorhergehenden Ansprüche, wobei Auslaßkopfteile (114, 116) vorgesehen sind, um den in den Läufen der Hoch- und Niederdruckrohre (48, 46) erzeugten Dampf zu empfangen, und wobei ferner die Auslaßkopfstücke (114, 116) im äußeren Gehäuse (38) umschlossen sind, wodurch im Kessel (26) erzeugter Dampf der durch Leck oder Bruch austritt sicher vom Gehäuse (38) durch den Abgasauslaß (40) geleitet wird.

6. Kessel nach einem der vorhergehenden Ansprüche, wobei die oben angeordnete Tragstruktur horizontale mit Abstand angeordnete Träger (88, 90, 92) aufweist, von denen aus ein unabhängiger Satz von Mittel- und Endstreifen (82, 80) herabhängt, um die Hoch- und Niederdruckrohre (46, 48) von jedem der Dampferzeugungskreise (44) zu tragen.

7. Kessel nach einem der vorhergehenden Ansprüche, wobei die horizontalen Rohrverläufe so versetzt sind, daß die Wärmeübertragung von den nach oben durch das Gehäuse (38) fließenden Heißgasen auf die Hoch- und Niederdruckrohre (46, 48) erhöht wird.

8. Kessel nach einem der vorhergehenden Ansprüche, wobei die Hochdruckrohre (46) jeweils Speisewasser-, Verdampfer- und Übererhitzerabschnitte aufweisen.

9. Kessel nach Anspruch 8, wobei die Verdampfer- und Überhitzerabschnitte einen größeren Durchmesser aufweisen als der Speisewasserabschnitt.

**Revendications**

1. Chaudière à circulation forcée en circuit ouvert (26) comportant une enceinte extérieure verticale (38) comprenant une arrivée du gaz et une sortie du gaz (40) respectivement au niveau de ses extrémités inférieure et supérieure; une structure de support en suspension (88, 90, 92) située dans l'enceinte extérieure (38); et une pluralité de circuits générateurs de vapeur (44) indépendants comprenant chacun un tube unique sinueux à haute pression (46) et un tube unique sinueux à basse pression, ces deux tubes comportant des éléments horizontaux; chaque circuit générateur de vapeur (44) étant suspendu à la structure de support en suspension (88, 92, 94, 96) au moyen d'un ensemble indépendant d'organes de suspension (80), qui supportent les extrémités des éléments horizontaux des tubes du circuit respectif, caractérisée par une pompe à eau d'alimentation (70) servant à introduire un écoulement d'eau dans les circuits générateurs de vapeur (44; en ce que dans chacun des circuits générateurs de vapeur (44) le tube à basse pression (48) est imbriqué avec le tube à haute pression (46); et en ce que les organes de suspension (80) sont juxtaposés les uns aux autres et coopèrent avec des revêtements (102) situés au niveau de l'avant et de l'arrière de l'enceinte de manière à définir un trajet montant de circulation du gaz à l'intérieur de l'enceinte extérieure (38) depuis l'entrée jusqu'à la sortie (40).

2. Chaudière (26) selon la revendication 1, dans laquelle tous les composants, qui sont mouillables par des fluides aqueux, sont réalisés en des matériaux résistant à la corrosion.

3. Chaudière selon la revendication 1 ou 2, dans laquelle les tubes à haute et à basse pression (46, 48) sont munis d'ailettes extérieures hélicoïdales pleines (78).

4. Chaudière selon l'une quelconque des revendications précédentes, dans laquelle il existe des moyens munis d'un orifice (122) situés au niveau de l'extrémité d'arrivée (52, 50) de chacun des tubes à haute et à basse pression (46, 48) de manière à créer au niveau de l'entrée dans ces tubes une chute de pression qui est suffisamment élevée pour que la chute de pression dans le reste du tube (48, 46) réduise l'instabilité d'écoulement dans ce tube.

5. Chaudière selon l'une quelconque des revendications précédentes, comportant des collecteurs de sortie (114, 116) destinés à recevoir la vapeur produite dans les éléments des tubes à haute et à basse pression (48, 46), les collecteurs de sortie (114, 116) étant renfermés dans l'enceinte extérieure (38), ce qui a pour effet que la vapeur produite dans la chaudière (26) et sortant sous l'effet d'une fuite ou d'une rupture est acheminée de façon sûre depuis l'enceinte (38) à travers la sortie des gaz d'échappement (40).

6. Chaudière selon l'une quelconque des revendications précédentes, dans laquelle la structure de support en suspension comporte des poutres horizontales espacées (88, 90, 92) auxquelles est suspendu un ensemble d'une bande centrale et de bandes d'extrémité (82, 80) indépendantes, servant à supporter les tubes à haute et à basse pression (46, 48) de chacun des circuits générateurs de vapeur (44).

7. Chaudière selon l'une quelconque des revendications précédentes, dans laquelle les éléments de tube horizontaux sont étagés de manière à accroître le transfert de chaleur depuis les gaz chauds montant à l'intérieur de l'enceinte (38) aux tubes à haute et à basse pression (46, 48).

8. Chaudière selon l'une quelconque des revendications précédentes, dans laquelle les tubes à haute pression (46) comprennent chacun une section pour l'eau d'alimentation, une section formant évaporateur et une section formant surchauffeur.

9. Chaudière selon la revendication 8, dans laquelle les sections formant évaporateur et surchauffeur possèdent un diamètre plus important que la section pour l'eau d'alimentation.

F I G . 1

FIG. 2

0 139 000

2

FIG.3

FIG.6

# FIG.4a

80

46

46

46

48

46

80

46

46

80

## FIG.4b

82

82

## FIG.5a    FIG.5b